# FASCICULE DE BREVET EUROPEEN

(11) **EP 0 831 634 B1**
(45) Date de publication et mention de la délivrance du brevet: **04.02.2004**
(21) Numéro de dépôt: 97402189.1
(22) Date de dépôt: 19.09.1997
(51) Int. Cl.: H04M 11/02

(54) **Portier électronique sans fil.**
Elektronische drahtlose Türsprechanlage
Electronic wireless door telephone

(30) Priorité: 20.09.1996 FR 9611496
(43) Date de publication de la demande: 25.03.1998
(73) Titulaire: Comptoir Français de L'Interphone, 01600 Trevoux (FR)
(72) Inventeur: Hoffmann, Jean-Claude, 69250 Montanay (FR)
(74) Mandataire: Leszczynski, André

(56) Documents cités:
- EP-A- 0 453 957
- WO-A-96/05688
- DE-C- 4 408 972
- FR-A- 2 593 339

## Description

La présente invention concerne un portier électronique pour habitation, du type comportant une platine de rue destinée à être utilisée par un visiteur et un poste intérieur destiné à être utilisé par un occupant de l'habitation, la platine de rue étant munie d'un bouton d'appel et étant reliée à une gâche électrique équipant une porte de l'habitation, la platine de rue et le poste intérieur comportant des moyens permettant d'établir une liaison phonique et le poste intérieur comportant un bouton de commande d'ouverture de la gâche.

On connaît par l'ouvrage "Interphones et talkies walkies" aux Editions Radio (1974), de nombreux portiers électroniques pour habitation de ce type, dans lesquels la transmission du son et des informations entre la platine de rue et le poste intérieur est assurée par un ou plusieurs câbles électriques.

La puissance électrique consommée par le circuit électrique de la gâche est relativement importante et elle est typiquement supérieure à une dizaine de watts.

Les constructeurs de gâches électriques proposent donc de les alimenter à partir d'un transformateur dont le primaire est relié au secteur et dont le secondaire est capable de restituer une puissance d'une vingtaine de watts.

La pose des câbles électriques entre la platine de rue et le poste intérieur et pour l'alimentation de la gâche électrique constitue un problème lorsqu'elle n'est pas prévue dès la construction de l'habitation.

Un problème analogue est rencontré lorsqu'il s'agit de poser un câble reliant un bouton d'appel à une sonnerie placée à l'intérieur de l'habitation. Il a été proposé depuis longtemps des dispositifs communément appelés carillons sans fil dans lesquels la liaison filaire traditionnelle entre le bouton d'appel et la sonnerie est remplacée par une liaison radio.

Alors que dans un carillon sans fil l'information transmise par radio est unidirectionnelle et très simple puisqu'il s'agit de commander à distance le déclenchement d'une sonnerie, en revanche dans un portier électronique l'information est bidirectionnelle et plus complexe puisqu'elle doit permettre d'une part l'établissement d'un dialogue entre le visiteur et l'occupant et d'autre part la commande à distance de la gâche lorsque l'occupant ouvre à son visiteur.

A la connaissance de la demanderesse, aucun portier électronique d'habitation sans fil n'a été proposé à ce jour.

Les techniques connues telles que celles mises en oeuvre sur les carillons sans fil n'apportent en effet aucune solution au problème de la consommation électrique de la platine de rue et obligeraient à utiliser des piles de forte capacité et très coûteuses, ou à prévoir un remplacement si fréquent des piles ou un nombre de piles si important que cela enlèverait tout intérêt sur le plan pratique à la liaison sans fil.

En outre, hormis le problème de l'autonomie de la platine de rue les techniques connues de téléphonie sans fil n'apportent aucune solution au problème de la transmission des informations telles que la commande d'ouverture de la gâche, qui doit être insensible aux interférences pour éviter toute ouverture intempestive de la gâche, préjudiciable à la sécurité de l'habitation.

Enfin, la liaison sans fil entre la platine de rue et le poste intérieur doit être de longue portée car elle doit franchir les murs de l'habitation.

Or, la solution connue qui consiste pour augmenter la portée d'un émetteur à augmenter sa puissance est incompatible avec d'une part l'exigence d'autonomie de la platine de rue et d'autre part le respect des normes d'émission imposées par l'Administration, qui limitent considérablement la puissance maximale autorisée.

On connaît par WO96/05688 un portier constituant également une alarme, comportant une alimentation de sauvegarde en plus d'une connexion au secteur.

On a décrit dans la demande de brevet français FR-A-2593339 et dans le brevet allemand DE-C-44 08972 des portiers selon le préambule de la revendication 1, capables de commander par ondes hertziennes une gâche.

Toutefois, dans ces dispositifs connus, la gâche n'est pas alimentée par une source d'énergie autonome contenue dans la platine de rue et il est nécessaire de relier par un cordon d'alimentation la gâche ou la platine de rue au réseau électrique général, avec les inconvénients liés à la mise en place de ce cordon si sa pose n'a pas été prévue lors de la construction de l'habitation.

L'invention a pour objet de proposer un portier électronique sans fil pour habitation dont la platine de rue ait une consommation électrique suffisamment faible pour permettre son alimentation par un petit nombre de piles de faible coût sans avoir à les remplacer fréquemment et qui assure en outre une liaison phonique de bonne qualité et une commande fiable de l'ouverture de la gâche.

L'invention y parvient par le fait que la platine de rue comporte en outre un émetteur et un récepteur radio et des moyens de reconnaissance d'un code d'ouverture de la gâche reçu par ledit récepteur, une alimentation électrique autonome, des moyens pour activer le circuit électrique de la gâche et des moyens de gestion de la consommation électrique pour mettre d'une part la platine de rue dans un état de veille où la consommation d'énergie électrique est à peu près nulle en l'attente d'une pression sur le bouton d'appel et d'autre part dans un état actif permettant l'établissement d'une liaison phonique avec le poste intérieur et l'activation du circuit électrique de la gâche lorsque le code d'ouverture de la gâche est reconnu et que les moyens pour activer le circuit électrique de la gâche disposent de l'énergie électrique nécessaire, les moyens pour activer le circuit électrique de la gâche comportant un condensateur dont la capacité nominale est choisie de manière à ce que, à l'état chargé, ce condensateur puisse, en étant déchargé dans le circuit électrique de la gâche, activer cette dernière pour autoriser l'ouverture de la porte.

Les inventeurs ont en réalisant l'invention vaincu le préjugé selon lequel la consommation électrique d'un portier électronique pour habitation ne pouvait être diminuée au point de rendre attractif le fait de l'alimenter par un petit nombre de piles peu coûteuses et qui explique pourquoi aucun portier électronique pour habitation sans fil n'a été proposé jusqu'à présent malgré le besoin constant d'un tel dispositif et le grand nombre de carillons et de téléphones sans fil proposés par ailleurs depuis longtemps.

Les moyens de reconnaissance du code d'ouverture de la gâche sont agencés de préférence de manière à déclencher la charge dudit condensateur au travers d'une résistance de limitation du courant de charge lorsque le code d'ouverture de la gâche a été reconnu, et les moyens pour activer le circuit électrique de la gâche comportent en outre des moyens pour surveiller le potentiel dudit condensateur et provoquer, lorsque celui-ci dépasse une valeur prédéterminée, sa décharge à travers le circuit électrique de la gâche.

Ainsi, grâce à l'invention, les piles constituant l'alimentation électrique autonome ne débitent jamais, même lorsque la gâche doit être excitée, un courant supérieur à une valeur prédéterminée, choisie pour ménager leur durée de vie.

Dans un exemple particulier de réalisation de l'invention, la platine de rue comporte des moyens pour provoquer l'émission d'un signal codé après qu'un visiteur ait appuyé sur le bouton d'appel, en vue de provoquer l'émission sur le poste intérieur d'un signal d'appel, le signal codé dépendant de l'état de l'alimentation électrique autonome. Le poste intérieur comporte des moyens pour décoder ce signal codé et émettre, lorsqu'un signal codé prédéterminé est reconnu, un signal indiquant à l'occupant que l'alimentation électrique autonome de la platine de rue est dans un état déchargé.

Ainsi, l'occupant est informé qu'il doit remplacer les piles sans qu'il y ait besoin de prévoir sur la platine de rue un voyant indicateur de l'état des piles, qui lui-même aurait consommé de l'énergie électrique et diminué l'autonomie de la platine de rue.

Dans un exemple particulier de réalisation de l'invention, le moyen de gestion de la consommation électrique précité comporte une temporisation déclenchée par une pression sur le bouton d'appel, cette temporisation commandant le maintien à l'état actif, pendant une durée prédéterminée, de la platine de rue.

Dans un exemple particulier de réalisation de l'invention, la platine de rue comporte un duplexeur radio.

Dans un exemple particulier de réalisation de l'invention, l'émetteur et le récepteur de la platine de rue fonctionnent en modulation de fréquence et en duplex avec deux porteuses séparées d'au moins 10 MHz.

Dans un exemple particulier de réalisation de l'invention, le poste intérieur comporte un bouton de prise de ligne et une temporisation déclenchée par une pression sur ce bouton, cette temporisation commandant l'alimentation en énergie électrique, pendant une durée prédéterminée, d'un émetteur radio.

Dans un exemple particulier de réalisation de l'invention, le poste intérieur est alimenté par une batterie rechargeable sur le secteur.

D'autres caractéristiques et avantages de la présente invention apparaîtront à la lecture de la description détaillée qui va suivre, d'un exemple de réalisation non limitatif de l'invention, et à l'examen du dessin sur lequel :
- la figure 1 est un schéma synoptique de la platine de rue, et
- figure 2 est un schéma synoptique du poste intérieur.

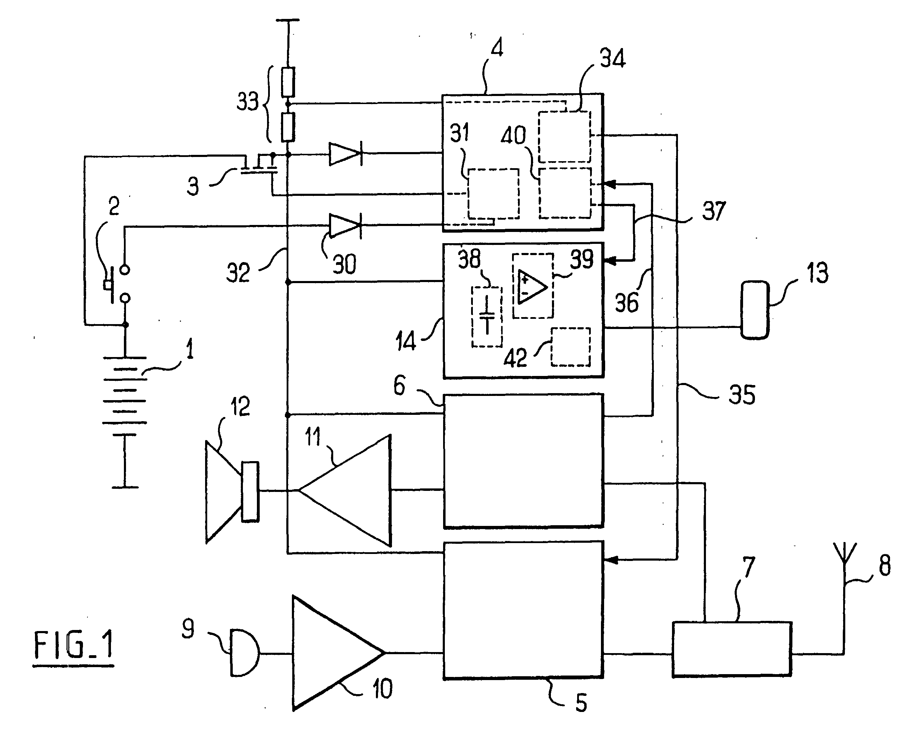

La platine de rue comporte, comme représenté sur la figure 1 :
- une alimentation électrique autonome 1 constituée dans l'exemple particulier de réalisation décrit par le montage en série de quatre piles du type LR 20, couramment disponibles dans le commerce,
- un interrupteur 2 servant de bouton d'appel,
- un interrupteur électronique 3,
- une unité centrale 4,
- un émetteur radio 5 du type à modulation de fréquence à bande étroite (+/- 1,5 kHz) dont la fréquence d'émission se situe dans la bande des 27 MHz par exemple, soit 26,995MHz ou 27,045 MHz ou 27,145 MHz par exemple
- un récepteur radio 6, du type à modulation fréquence à bande étroite (+/- 1,5 kHz) dont la fréquence de réception se situe dans dans la bande des 40 MHz par exemple, soit 40,680 MHz par exemple,
- un duplexeur 7 relié d'une part à l'émetteur 5 et au récepteur 6 et d'autre part à une antenne commune 8 qui peut être constituée par exemple par un simple brin de câble coaxial dénudé,
- un micro 9 relié à un préamplificateur 10 lui-même relié à l'émetteur 5,
- un amplificateur 11 relié en entrée au récepteur 6 et en sortie à un haut-parleur 12.

Le choix de la fréquence de l'émetteur peut s'effectuer en utilisant un quartz particulier ou en utilisant un composant permettant la sélection d'une fréquence particulière par voie logiciel.

Ce dernier cas présente l'avantage de pouvoir avoir un hardware commun à plusieurs fréquences différentes choisies en fonction de la législation du pays dans lequel le portier est utilisé.

La platine de rue est reliée à une gâche 13 du type à mémoire, c'est-à-dire équipée d'un mécanisme à levier connu en soi, qui reste dans un état permettant une seule ouverture de la porte après que le circuit électrique de la gâche a reçu une impulsion électrique de commande, qui peut être très brève.

La platine de rue comporte un circuit 14 pour délivrer une impulsion de courant au circuit électrique de la gâche 13.

A l'état de veille, la consommation de la platine de rue est inférieure à 100 nA et peut être considérée comme à peu près nulle.

L'interrupteur 2 constituant le bouton d'appel est à l'état ouvert et l'interrupteur électronique 3 également.

L'unité centrale 4, le circuit 14 pour activer la gâche 13, l'émetteur 5 et le récepteur 6 ne sont pas alimentés.

Lorsqu'un visiteur se présente et appuie sur le bouton d'appel,une impulsion électrique est envoyée par l'intermédiaire d'une diode 30 à l'unité centrale 4.

Cette dernière comporte une temporisation 31 qui est déclenchée par cette impulsion et qui maintient l'interrupteur électronique 3 à l'état passant pendant une durée prédéterminée, fixée par exemple à une minute.

L'émetteur 5, le récepteur 6, le circuit 14 pour activer la gâche 13 et l'unité centrale 4 se trouvent alors alimentés par la ligne 32.

La platine de rue comporte un diviseur de tension 33 et l'unité centrale 4 comporte des moyens 34 pour générer vers l'émetteur 5, en fonction de la tension délivrée par le diviseur 33, un signal codé en vue de provoquer l'émission sur le poste intérieur d'un signal d'appel.

Le signal délivré par les moyens 34 à l'émetteur est sous forme numérique et il est codé différemment selon que l'état de l'alimentation électrique 1 est satisfaisant ou que celle-ci doit être remplacée.

L'envoi du signal codé à l'émetteur 5 est schématisé par la flèche 35 sur la figure 1.

Après l'envoi de ce signal codé, le récepteur 6 se met en attente de la réception d'un signal confirmant que l'occupant souhaite établir une liaison phonique avec la platine de rue.

L'unité centrale 4 est en outre agencée pour commander l'émission d'un signal sonore au moyen du haut-parleur 12 après que le visiteur ait appuyé sur le bouton d'appel 2, de manière à confirmer à celui-ci que son appel a été enregistré.

On a schématisé la transmission des informations reçues par le récepteur 6 à l'unité centrale 4 par la flèche 36 sur la figure 1.

L'unité centrale 4 comporte des moyens 40 pour décoder les informations reçues par le récepteur 6 et si celles-ci comportent un code d'identification prédéterminé, l'unité centrale 4 autorise l'établissement d'une liaison phonique en full duplex entre la platine de rue et le poste intérieur.

Le fonctionnement de la platine de rue sera décrit plus en détail dans la suite.

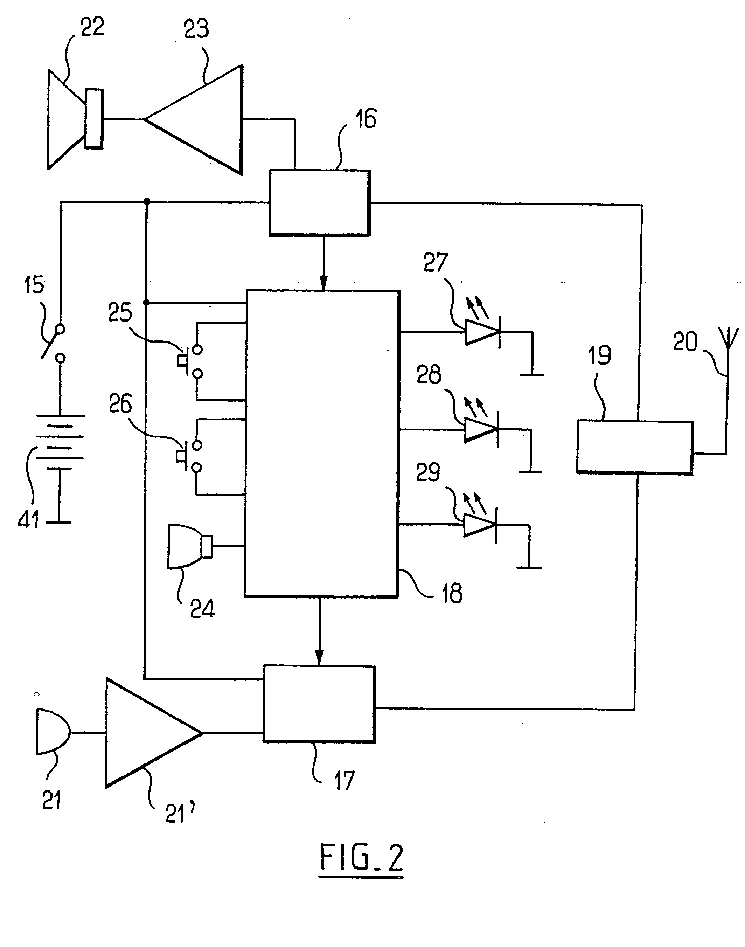

Le poste intérieur comporte, comme représenté sur la figure 2 :
- une alimentation électrique autonome 41 constituée dans l'exemple de réalisation décrit par un accumulateur NiCd rechargeable,
- un interrupteur marche-arrêt 15,
- un récepteur radio 16 du type à modulation de fréquence, dont la fréquence de réception est adaptée à la fréquence d'émission de l'émetteur 5 de la platine de rue,
- un émetteur 17 du type à modulation de fréquence dont la fréquence d'émission est adaptée à la fréquence de réception du récepteur 6 de la platine de rue,
- une unité centrale 18,
- un duplexeur 19 relié d'une part au récepteur 16 et à l'émetteur 17 et d'autre part à une antenne commune 20,
- un micro 21 relié à l'entrée d'un pré-amplificateur 21' dont la sortie est reliée à l'émetteur 17,
- un haut-parleur 22 relié à la sortie d'un amplificateur 23 dont l'entrée est reliée au récepteur 16,
- un buzzer 24 relié à l'unité centrale 18,
- un bouton 25 de prise de ligne,
- un bouton 26 de commande d'ouverture de la gâche 13,
- un voyant 27 pour avertir l'occupant que l'alimentation électrique 1 de la platine de rue doit être remplacée,
- un voyant 28 pour indiquer à l'occupant que l'état de charge de la batterie 41 est insuffisant,
- un voyant 29 pour confirmer à l'occupant la prise de ligne.

Dans l'exemple particulier de réalisation décrit, l'émetteur de la platine de rue ou du poste intérieur comporte un oscillateur local à quartz avec modulateur FM attaqué par le signal provenant du microphone ou de l'unité centrale, et un tripleur de fréquence qui permet d'obtenir une excursion en fréquence compatible avec un bon rapport signal sur bruit en transmission. La sortie du tripleur de fréquence attaque un étage amplificateur à transistors bipolaires qui délivre la puissance d'émission nécessaire au bon fonctionnement de la liaison.

Dans l'exemple particulier de réalisation décrit, le récepteur de la platine de rue ou du poste intérieur comporte un circuit spécialisé de type superhétérodyne qui assure une première conversion de fréquence avec un premier oscillateur local à quartz puis un deuxième changement de fréquence avec un oscillateur local à résonateur céramique.

Le fonctionnement du portier sans fil est le suivant.

On suppose que la platine de rue est à l'état de veille, l'interrupteur électronique 3 étant non passant.

Le récepteur 16 du poste intérieur est alimenté en permanence de manière à capter l'émission éventuelle par l'émetteur 5 d'un signal d'appel.

Lorsqu'un visiteur appuie sur le bouton d'appel 2, l'interrupteur électronique 3 devient passant et le haut-parleur 12 émet un signal sonore avertissant le visiteur que son appel a été enregistré.

L'émetteur 5 est alors alimenté et reçoit de l'unité centrale 4 un signal codé représentatif de l'état des piles, qui est émis vers le poste intérieur.

Le récepteur 16 du poste intérieur reçoit ce signal et le transmet à l'unité centrale 18 qui le décode.

Si le signal est interprété comme indiquant que les piles de la platine de rue doivent être remplacées, le voyant 27 s'allume.

La réception du signal codé provoque l'émission d'un signal sonore par le buzzer 24, pour avertir l'occupant qu'un appel a été enregistré par la platine de rue.

L'émission du signal sonore par le buzzer 24 peut durer par exemple une minute si l'occupant n'appuie pas sur le bouton de prise de ligne 25.

Lorsque l'occupant appuie sur le bouton de prise de ligne 25, l'unité centrale 18 interrompt la sonnerie du buzzer 24 et allume le voyant 29.

Le voyant 28 s'allume si la batterie 41 doit être rechargée.

L'unité centrale 18 envoie à l'émetteur 17 un signal codé qui est reçu par le récepteur 6 et dès sa reconnaissance par l'unité centrale 4, cette dernière commande le fonctionnement de l'émetteur 5 et du récepteur 6 de manière à établir une liaison phonique en full duplex avec le poste intérieur.

Lorsque l'occupant appuie sur le bouton 26 de commande de l'ouverture de la gâche, le poste intérieur émet un signal codé de commande d'ouverture de la gâche, sous forme numérique, qui est reçu par le récepteur 6 et envoyé à l'unité centrale 4 pour être décodé.

Le codage peut s'effectuer par exemple sur 10 bits.

Si le code de commande d'ouverture de la gâche est reconnu, l'unité centrale 4 envoie, comme schématisé par la flèche 37 sur la figure 1, un signal au circuit 14 pour que celui-ci excite le circuit électrique de la gâche.

La charge du condensateur 38 débute dès réception du signal de commande 37. Le circuit 14 comporte dans l'exemple décrit une alimentation à découpage 42 pour charger le condensateur sous une tension supérieure à celle de l'alimentation 1, par exemple égale à 12 V.

Le comparateur 39 compare la tension du condensateur 38 à une valeur prédéterminée choisie de manière à ce que l'énergie électrique stockée dans le condensateur, lorsque son potentiel atteint cette valeur prédéterminée, soit suffisante pour que la décharge du condensateur dans le circuit électrique de la gâche autorise l'ouverture de la porte. La capacité nominale du condensateur est par exemple 2200 µF ou 4700 µF et sa charge s'effectue au travers d'une résistance de limitation du courant de charge, de 10 ohms par exemple.

Après l'excitation de la gâche 13 (ou en variante après une durée prédéterminée après l'excitation de la gâche 13 ou encore dans une autre variante après une durée prédéterminée suivant la pression exercée sur le bouton d'appel 2), l'interrupteur électronique 3 s'ouvre et la platine de rue retourne dans un état de veille, dans lequel la consommation électrique est pratiquement nulle.

Bien entendu, l'invention n'est pas limitée à l'exemple de réalisation qui vient d'être décrit.

on peut notamment alimenter le poste intérieur en permanence par le secteur mais il est toutefois avantageux que l'alimentation soit effectuée au moyen d'un accumulateur rechargeable 41, ce qui permet de réaliser le poste intérieur sous la forme d'un combiné portable proche par son format d'un combiné de téléphone sans fil.

L'unité centrale 4 peut être constituée par exemple par un microcontrôleur programmé pour réaliser notamment les fonctions des moyens 31, 34 et 40 précités.

En variante, ces fonctions peuvent être réalisées par un ensemble de composants électroniques discrets ou par un ASIC.

Les duplexeurs 7, 19 peuvent être des composants spécialisés destinés à travailler à des fréquences prédéterminées ou être réalisés par un assemblage de composants passifs tels que pots ferrites, selfs, filtres céramiques afin de pouvoir équiper avec un même duplexeur un ensemble de portiers travaillant à des fréquences sensiblement différentes, l'adaptation se faisant pour chaque fréquence par un réglage d'un ou plusieurs composants du duplexeur.

Il faut bien entendu entendre par "habitation" une habitation de type familial ou un groupe d'habitations, un immeuble, ou encore des locaux à usage professionnel.

## Revendications

1. Portier électronique pour habitation, du type comportant une platine de rue destinée à être utilisée par un visiteur et un poste intérieur destiné à être utilisé par un occupant de l'habitation, la platine de rue étant munie d'un bouton d'appel et étant reliée à une gâche électrique équipant une porte de l'habitation, la platine de rue et le poste intérieur comportant des moyens permettant d'établir une liaison phonique et le poste intérieur comportant un bouton de commande d'ouverture de la gâche, la platine de rue comportant un émetteur (5) et un récepteur (6) radio, des moyens (40) de reconnaissance d'un code d'ouverture de la gâche (13) reçu par ledit récepteur (6), **caractérisé par le fait que** la platine de rue comporte en outre une alimentation électrique autonome, des moyens (14) pour activer le circuit électrique de la gâche comportant un condensateur (38) dont la capacité nominale est choisie de manière à ce qu'à l'état chargé, ce condensateur puisse, en étant déchargé dans le circuit électrique de la gâche, activer cette dernière pour autoriser l'ouverture de la porte, et des moyens (4) de gestion de la consommation électrique pour mettre d'une part la platine de rue dans un état de veille où la consommation d'énergie électrique est négligeable en l'attente d'une pression sur le bouton d'appel et d'autre part dans un état actif permettant l'établissement d'une liaison phonique avec le poste intérieur et l'activation du circuit électrique de la gâche lorsque le code d'ouverture de la gâche est reconnu et que les moyens (14) pour activer le circuit électrique de la gâche disposent de l'énergie électrique nécessaire.

2. Portier électronique selon la revendication 1, **caractérisé par le fait que** les moyens de reconnaissance du code d'ouverture de la gâche sont agencés de manière à déclencher la charge dudit condensateur sous une tension supérieure à la tension délivrée par l'alimentation électrique autonome lorsque le code d'ouverture de la gâche a été reconnu.

3. Portier selon la revendication 2, **caractérisé par le fait que** les moyens pour activer le circuit électrique de la gâche comportent des moyens (39) pour surveiller le potentiel dudit condensateur et provoquer, lorsque celui-ci atteint une valeur prédéterminée, sa décharge à travers le circuit électrique de la gâche (13).

4. Portier électronique selon l'une quelconque des revendications 1 à 3, **caractérisé par le fait que** la platine de rue comporte des moyens (34) pour provoquer l'émission d'un signal codé après qu'un visiteur ait appuyé sur le bouton d'appel (2), en vue de provoquer l'émission sur le poste intérieur d'un signal d'appel, ce signal codé dépendant de l'état de l'alimentation électrique autonome (1), et **par le fait que** le poste intérieur comporte des moyens (18) pour décoder ledit signal codé et émettre, lorsqu'un signal codé prédéterminé est reconnu, un signal indiquant à l'occupant que l'alimentation électrique autonome (1) de la platine de rue est dans un état déchargé.

5. Portier électronique selon l'une quelconque des revendications 1 à 4, **caractérisé par le fait que** lesdits moyens (4) de gestion de la consommation électrique de la platine de rue comportent une temporisation (31) déclenchée par une pression sur le bouton d'appel, cette temporisation commandant le maintien à l'état actif, pendant une durée prédéterminée, de la platine de rue.

6. Portier électronique selon l'une quelconque des revendications précédentes, **caractérisé par le fait que** la platine de rue comporte un duplexeur radio (7).

7. Portier électronique selon l'une quelconque des revendications précédentes, **caractérisé par le fait que** l'émetteur (5) et le récepteur (6) de la platine de rue fonctionnent en modulation de fréquence et en duplex avec deux porteuses de fréquences séparées d'au moins 10 MHz.

8. Portier électronique selon l'une quelconque des revendications précédentes, **caractérisé par le fait que** le poste intérieur comporte un bouton de prise de ligne (25) et une temporisation déclenchée par une pression sur ce bouton, cette temporisation commandant l'alimentation en énergie électrique, pendant une durée prédéterminée, d'un émetteur radio (17).

9. Portier selon l'une quelconque des revendications précédentes, **caractérisé par le fait que** le poste intérieur est alimenté par une batterie (41) rechargeable sur le secteur.

10. Portier selon l'une quelconque des revendications précédentes, **caractérisé par le fait que** les moyens pour activer le circuit électrique de la gâche comportent une alimentation à découpage (42) pour charger le condensateur sous une tension supérieure à celle de l'alimentation électrique autonome (1).

11. Portier selon l'une quelconque des revendications précédentes, **caractérisé par le fait que** l'alimentation électrique autonome est constituée par des piles.

12. Portier électronique pour habitation selon la revendication 3, **caractérisé par le fait que** l'alimentation électrique autonome est constituée de quatre piles en série délivrant une tension de 6V et **par le fait que** le poste intérieur se présente sous la forme d'un combiné portable, comportant un voyant pour indiquer à l'occupant que l'alimentation de la platine de rue doit être changée, un bouton de prise de ligne et un bouton de commande d'ouverture de la gâche.

## Patentansprüche

1. Elektronische Haussprech- und Türöffnungsanlage für ein Wohnhaus, von dem Typ, der eine Straßenplatte, die dazu bestimmt ist, von einem Besucher benutzt zu werden, und eine Innenstation aufweist, die dazu bestimmt ist, von einem Bewohner des Wohnhauses benutzt zu werden, wobei die Straßenplatte mit einem Rufknopf versehen ist und mit einem elektrischen Türöffner verbunden ist, mit dem eine Tür des Wohnhauses ausgerüstet ist, wobei die Straßenplatte und die Innenstation Mittel aufweisen, die die Herstellung einer Sprechverbindung gestatten, und die Innenstation einen Knopf zur Steuerung der Öffnung des Türöffners aufweist, wobei die Straßenplatte einen Funksender (5) und einen Funkempfänger (6) aufweist, sowie Mittel (40) zum Erkennen eines vom Empfänger (6) empfangenen Codes zur Öffnung des Türöffners (13), **dadurch gekennzeichnet, dass** die Straßenplatine außerdem folgendes aufweist: eine autonome Stromversorgung, Mittel (14) zur Aktivierung des Stromkreises des Türöffners, die einen Kondensator (38) aufweisen, dessen Nennkapazität so gewählt ist, dass dieser Kondensator im geladenen Zustand, indem er in den Stromkreis des Türöffners entladen wird, diesen aktivieren kann, um die Öffnung der Tür zuzulassen, und Mittel (4) zur Steuerung des Stromverbrauchs, um einerseits die Straßenplatte in einen Bereitschaftszustand zu versetzen, in dem der elektrische Energieverbrauch während des Wartens auf einen Druck auf den Rufknopf vernachlässigbar ist, und andererseits in einen aktiven Zustand zu versetzen, der die Herstellung einer Sprechverbindung mit der Innenstation und die Aktivierung des Stromkreises des Türöffners gestattet, wenn der Öffnungscode des Türdrückers erkannt wurde und die Mittel (14) zur Aktivierung des Stromkreises des Türdrückers über die erforderliche elektrische Energie verfügen.

2. Elektronische Haussprech- und Türöffnungsanlage nach Anspruch 1, **dadurch gekennzeichnet, dass** die Mittel zum Erkennen des Öffnungscodes des Türöffners so ausgebildet sind, dass sie die Ladung dieses Kondensators unter einer Spannung auslösen, die höher als die von der autonomen Stromversorgung gelieferte Spannung ist, wenn der Öffnungscode des Türöffners erkannt wurde.

3. Haussprech- und Türöffnungsanlage nach Anspruch 2, **dadurch gekennzeichnet, dass** die Mittel zum Aktivieren des Stromkreises des Türöffners Mittel (39) aufweisen, um das Potential dieses Kondensators zu überwachen und, wenn dieses einen vorbestimmten Wert erreicht, seine Entladung über den Stromkreis des Türöffners (13) zu bewirken.

4. Elektronische Haussprech- und Türöffnungsanlage nach einem der Ansprüche 1 bis 3, **dadurch gekennzeichnet, dass** die Straßenplatte Mittel (34) aufweist, um die Sendung eines codierten Signals zu bewirken, nachdem ein Besucher auf den Rufknopf (2) gedrückt hat, um die Sendung eines Rufsignals zur Innenstation zu bewirken, wobei dieses codierte Signal vom Zustand der autonomen Stromversorgung (1) abhängt, und dadurch, dass die Innenstation Mittel (18) aufweist, um dieses codierte Signal zu decodieren und, wenn ein vorbestimmtes codiertes Signal erkannt wurde, ein Signal zu senden, das dem Bewohner anzeigt, dass die autonome Stromversorgung (1) der Straßenplatte in einem entladenen Zustand ist.

5. Elektronische Haussprech- und Türöffnungsanlage nach einem der Ansprüche 1 bis 4, **dadurch gekennzeichnet, dass** die Mittel (4) zur Steuerung des Stromverbrauchs der Straßenplatte eine Verzögerung (31) aufweisen, die durch einen Druck auf den Rufknopf ausgelöst wird, wobei diese Verzögerung bewirkt, dass die Straßenplatte während einer vorbestimmten Zeit im aktiven Zustand gehalten wird.

6. Elektronische Haussprech- und Türöffnungsanlage nach einem der vorhergehenden Ansprüche, **dadurch gekennzeichnet, dass** die Straßenplatte einen Funkduplexer (7) aufweist.

7. Elektronische Haussprech- und Türöffnungsanlage nach einem der vorhergehenden Ansprüche, **dadurch gekennzeichnet, dass** der Sender (5) und der Empfänger (6) der Straßenplatte mit Frequenzmodulation und Duplex mit zwei Trägerwellen mit durch mindestens 10 MHz getrennten Frequenzen arbeitet.

8. Elektronische Haussprech- und Türöffnungsanlage nach einem der vorhergehenden Ansprüche, **dadurch gekennzeichnet, dass** die Innenstation einen Leitungsschaltknopf (25) und eine durch einen Druck auf diesen Knopf ausgelöste Verzögerung aufweist, wobei diese Verzögerung die Versorgung eines Funksenders (17) mit elektrischer Energie während einer vorbestimmten Zeit bewirkt.

9. Haussprech- und Türöffnungsanlage nach einem der vorhergehenden Ansprüche, **dadurch gekennzeichnet, dass** die Innenstation durch eine am Netz aufladbare Batterie (41) gespeist ist.

10. Haussprech- und Türöffnungsanlage nach einem der vorhergehenden Ansprüche, **dadurch gekennzeichnet, dass** die Mittel zum Aktivieren des Stromkreises des Türöffners eine Zerhackungsversorgung (42) aufweisen, um den Kondensator unter einer Spannung zu laden, die höher als die der autonomen Stromversorgung (1) ist.

11. Haussprech- und Türöffnungsanlage nach einem der vorhergehenden Ansprüche, **dadurch gekennzeichnet, dass** die autonome Stromversorgung aus Batterien besteht.

12. Elektronische Haussprech- und Türöffnungsanlage für ein Wohnhaus nach Anspruch 3, **dadurch gekennzeichnet, dass** die autonome Stromversorgung aus vier Batterien in Reihe besteht, die eine Spannung von 6V liefern, und dass die Innenstation die Form eines tragbaren Fernsprechers hat, der eine Sichtanzeige, um dem Bewohner anzuzeigen, dass die Versorgung der Straßenplatte ausgetauscht werden muss, einen Leitungsschaltknopf und einen Knopf zum Steuern der Öffnung des Türdrückers aufweist.

## Claims

1. Entrance intercom for residence, of the type comprising an entry panel intended to be used by a visitor and an inside unit intended to be used by an occupant of the residence, the entry panel being fitted with a call button and being linked to an electric catch with which a door of the residence is equipped, the entry panel and the inside unit comprising means making it possible to establish a voice link and the inside unit comprising a control button for releasing the catch, the entry panel comprising a radio transmitter (5) and a receiver (6), means (40) for recognizing a catch (13) release code received by the said receiver (6), **characterized in that** the entry panel furthermore comprises a stand-alone power supply, means (14) for activating the electrical circuit of the catch comprising a capacitor (38) whose nominal capacitance is chosen in such a way that in the charged state, this capacitor can, by being discharged into the electrical circuit of the catch, activate the latter so as to permit the opening of the door, and means (4) for managing power consumption so as to place on the one hand the entry panel in a standby state in which the consumption of electrical energy is negligible while awaiting the pressing of the call button and on the other hand in an active state allowing the establishment of a voice link with the inside unit and the activation of the electrical circuit of the catch when the catch release code is recognized and when the necessary power is available to the means (14) for activating the electrical circuit of the catch.

2. Entrance intercom according to Claim 1, **characterized in that** the means for recognizing the catch release code are devised in such a way as to trigger the charging of the said capacitor under a voltage greater than the voltage delivered by the stand-alone power supply when the catch release code has been recognized.

3. Intercom according to Claim 2, **characterized in that** the means for activating the electrical circuit of the catch comprise means (39) for monitoring the potential of the said capacitor and for bringing about, when the latter reaches a predetermined value, the discharging thereof through the electrical circuit of the catch (13).

4. Entrance intercom according to any one of Claims 1 to 3, **characterized in that** the entry panel comprises means (34) for bringing about the transmission of a coded signal after a visitor has depressed the call button (2), with a view to bringing about the transmission to the inside unit of a call signal, this coded signal depending on the state of the stand-alone power supply (1), and **in that** the inside unit comprises means (18) for decoding the said coded signal and for transmitting, when a predetermined coded signal is recognized, a signal indicating to the occupant that the stand-alone power supply (1) of the entry panel is in a discharged state.

5. Entrance intercom according to any one of Claims 1 to 4, **characterized in that** the said means (4) for managing the power consumption of the entry panel comprise a timer (31) triggered by the pressing of the call button, this timer causing the entry panel to be maintained in the active state for a predetermined duration.

6. Entrance intercom according to any one of the preceding claims, **characterized in that** the entry panel comprises a radio duplexer (7).

7. Entrance intercom according to any one of the preceding claims, **characterized in that** the transmitter (5) and the receiver (6) of the entry panel operate by frequency modulation and in duplex mode with two carriers of frequencies separated by at least 10 MHz.

8. Entrance intercom according to any one of the preceding claims, **characterized in that** the inside unit comprises a line seizure button (25) and a timer triggered by the pressing of this button, this timer causing a radio transmitter (17) to be supplied with power for a predetermined duration.

9. Intercom according to any one of the preceding claims, **characterized in that** the inside unit is powered by a mains-rechargeable battery (41).

10. Intercom according to any one of the preceding claims, **characterized in that** the means for activating the electrical circuit of the catch comprise a chopped supply (42) for charging the capacitor under a voltage greater than that of the stand-alone power supply (1).

11. Intercom according to any one of the preceding claims, **characterized in that** the stand-alone power supply consists of cells.

12. Entrance intercom for residence according to Claim 3, **characterized in that** the stand-alone power supply consists of four cells in series delivering a voltage of 6V and **in that** the inside unit takes the form of a portable handset, comprising a pilot light for indicating to the occupant that the supply for the entry panel must be changed, a line seizure button and a catch release control button.
